# EUROPEAN PATENT SPECIFICATION

(11) **EP 1 887 056 B1**
(45) Date of publication and mention of the grant of the patent: **08.06.2011**
(21) Application number: 05734291.7
(22) Date of filing: 14.04.2005
(51) Int. Cl.: C09D 11/00, B41M 5/00

(54) **INK COMPOSITION AND PRINTING METHOD USING THE SAME**
TINTENZUSAMMENSETZUNG UND DAVON GEBRAUCH MACHENDES DRUCKVERFAHREN
COMPOSITION D' ENCRE ET PROCEDE D' IMPRESSION UTILISANT CELLE-CI.

(43) Date of publication of application: 13.02.2008
(73) Proprietor: General Technology Company Limited, Koka-shi Shiga 528-0062 (JP)
(72) Inventor: ISOBE, K., c/o GENERAL TECHNOLOGY COMPANY LIMITED, Koka-shi, Shiga 528-0062 (JP)
(74) Representative: HOFFMANN EITLE
(86) International application number: PCT/JP2005/007581
(87) International publication number: WO 2006/112031

(56) References cited:
- EP-A- 1 431 984
- WO-A-02/089906
- JP-A- 2003 292 836
- JP-A- 2003 306 625
- JP-A- 2004 067 932
- JP-A- 2004 256 757
- JP-A- 2005 120 226
- JP-B2- 61 055 596

## Description

### BACKGROUND OF THE INVENTION

### Technical Field

The present invention relates to a novel ink composition with which a printing face having metal gloss can be formed by printing according to an inkjet method and the like, and a printing method using the same.

### Background Art

Recently, printing according to a so-called inkjet method is used across a wider range of fields from output printing of personal computers to printing of large prints such as commercial advertisements. In printing according to the inkjet method, an ink pattern made of an ink composition of multi-colors composed of three primary colors of cyan, magenta and yellow, or four or more colors on the basis of these three colors is superimposed on a printing material such as paper, whereby full color images are expressed by a mixture of respective colors.

However, because of the above-described expression method, there is a problem of expression inability of metal gloss in printing according to the inkjet method. Therefore, recently, there have been suggested various ink compositions using fine metal particles as a colorant, for expression of metal gloss.

For example, (1) Japanese Unexamined Patent Publication No. JP 11-323223 A (1999) discloses an ink composition obtained by finely grinding a metal deposited film laminated on a resin film by drawing the resin film to produce metal particles in the form of flakes and dispersing the particles as a colorant in a dispersing medium. (2) Japanese Unexamined Patent publication No.JP 11-343436 A (1999) discloses an ink composition produced by grinding a laminate composed of two or more layers of a metal deposited film and a resin layer by an analogous method as described above to produce particles of a multi-layer structure, and dispersing the particles as a colorant in a dispersing medium. Furthermore, (3) Japanese Unexamined Patent Publication No. JP 2000-017208 A discloses an ink composition obtained by including any of the above-described metal particles in microcapsules, and dispersing the microcapsules as a colorant in a dispersing medium.

However, the metal particles in the form of flakes used in the ink composition described in Document (1) described above have large sizes of a thickness of approximately 0.08 to 0.12 µm and a maximum length of approximately 0. 8 to 2 µm in example levels thereof, and in addition, have a flat indefinite shape as is understood from the above-described production method, and yet have irregularities in shape and size between the particles.

The particles of a multi-layer structure used in the ink composition described in Document (2) have larger sizes of a thickness of approximately 0.75 to 1.1 µm and a maximum length of approximately 3.8 to 4.0 µm in example levels thereof, and in addition, have a flat indefinite shape, and yet have irregularities in shape and size between the particles. The microcapsules used in the ink composition described in Document (3) are further larger particles having a diameter of approximately 5 to 70 µm.

Thus, all of these particles show insufficient dispersion stability against aqueous dispersing medium such as water often used in particular, in ink compositions of inkjet printers for personal computers, which provides a risk of separation and precipitation to cause unusability during the period from production to actual use by end users.

Recently, upgrading of the image quality of printing according to an inkjet method has progressed rapidly, and it is necessary to decrease the size of liquid drops of an ink composition discharged from a nozzle of a head of a printer as small as possible for upgrading of the image quality. Thus, there is a tendency toward miniaturization of the diameter of a nozzle. However, with the above-described particles having a large size, a flat indefinite shape, and furthermore, irregularities in shape and size between the particles, such miniaturization cannot be sufficiently attained to cause also a problem of clogging of a nozzle and the like.

Furthermore, even if printing is carried out using a conventional ink composition containing large size particles as described above, a printing face shows a remarkable granular texture of individual particles, and there is also a problem of difficulty to express smooth favorable metal gloss as observed, for example, on metal masses and metal foils, and a surface of continuous metal films.

Accordingly, the present inventor has suggested a use of a metal colloid as a colorant for expressing metal gloss (Japanese Unexamined Patent Publication No. JP 2003-306625 A).

For example, an aqueous metal colloid is produced by mixing an aqueous solution containing a metal ion with a reducing agent, or spraying an aqueous solution containing a metal ion to contact with a hydrogen flame and the like to reduce and deposit a metal in the aqueous solution.

Metal particles contained in the metal colloid have regular individual particle diameters and show a sharp particle size distribution since the above-described reduction reaction progresses uniformly in the system. Further, metal particles contained in the metal colloid are substantially spherical and have regularities in shape. In addition, by adjusting the reaction conditions, the particle diameter of the metal particle can also be smaller than that of the conventional one. The metal particles contained in the metal colloid are deposited and produced by a reduction reaction in water as described above and the like, and the surface thereof has hydrophilicity. Consequently, dispersion stability thereof against an aqueous dispersion medium such as water is also excellent.

As the metal colloid, those containing various metal particles matched with hue of the metal gloss to be expressed and the like can be used. In particular, a silver particle has a brighter color tone as compared with other metal particles. Thus, an ink composition using a metal colloid containing a silver particle, that is, a silver colloids as a colorant is suitable for expression of metal-like gloss. Although a printing face formed using an ink composition containing the silver colloid shows excellent metal gloss only immediately after printing, there is a problem of discoloration in a relatively short period of time.

If a colloid of a noble metal such as platinum is used, discoloration of a printing face in a short period of time can be prevented because the noble metal is more stable than silver. If a colloid of gold among noble metals is used as a colorant, gold color having gloss can be expressed, and discoloration of a printing face in a short period of time can be prevented. However, since noble metals are more expensive than silver, there is a problem of remarkably higher cost of an ink composition.

### Disclosure of the Invention

The present invention has an object of providing a novel ink composition with which discoloration of a printing face in a relatively short period of time can be prevented, whereby, favorable metal gloss can be maintained on the printing face over a longer period of time than that of the conventional one, despite using a silver colloid as a colorant which is more inexpensive than noble metals while it discolors easily.

The present invention has another object of providing a printing method for expressing various colors such as gold having gloss using the above-described ink composition.

The ink composition of the present invention for attaining the above-described objects includes a silver colloid and an antitarnish agent for preventing discoloration of silver.

The reason for discoloration in a short period of time of a printing face formed by an ink composition using a silver colloid as a colorant is that a silver particle reacts (sulfurization reaction) with a sulfide gas (sulfur gas) in air, whereby a black coat of silver sulfide is produced on its surface. In response thereto, when an antitarnish agent is contained in an ink composition as described above, progress of a sulfurization reaction on the surface of the silver after printing and production of a coat of silver sulfide associated therewith can be suppressed by a function of the antitarnish agent, which is a water-soluble salt of 2-mercaptobenzothiazole according to the present invention.

Therefore, according to the ink composition of the present invention, discoloration of the printing face in a relatively short period of time can be prevented, whereby, favorable metal gloss can be maintained on the printing face over a longer period of time than that of the conventional one, despite using a silver colloid as a colorant which is likely to discolor. Since many antitarnish agents also have a binder-like function for the silver particle, the fixing property of the silver particle to a printing material can also be improved. In addition, since silver is more inexpensive than noble metals such as platinum, cost of the ink composition can also be suppressed.

As the silver colloid, those having a median diameter d₅₀ of 0.04 µm or less by a laser diffraction scattering method are preferable. When the ink composition containing such fine silver particles is used, the function of the antitarnish agent to prevent discoloration of silver can be further effective. The fixing property of the silver particle to the printing material can also be improved.

For example, the case of printing an ink composition on the surface of a porous printing material such as paper is assumed as below. That is, on the surface of the printed printing material, silver particles having a median diameter d₅₀ larger than the above-described range are present in a slightly floating state without completely sinking into many pores present on the surface. Therefore, the fixing property to the printing material may be insufficient. Since most of the other components including the antitarnish agent are absorbed into the above-described holes, the wide range, in particular, of the upper print face side among the surfaces of the silver particles are exposed without being covered with the anti tarnish agent, and this may result in easy discoloration.

On the other hand, the fine silver particles having the median diameter d₅₀ satisfying the above-described range can exist on the surface of the printed printing material with greater sinking than that in the above-described case in many holes present on the surface, whereby the fixing property to the printing material can be improved. Under this condition, the surfaces of the silver particles can be covered with the antitarnish agent over wider ranges as compared with the above-described case. As a result, the discoloration can be prevented more effectively.

On the other hand, the case of printing the ink composition on the surface of a non-porous printing material such as a plastic film is assumed as below. That is, silver particles having the median diameter d₅₀ over the above-described range are present on the surface of the printed printing material in a manner significantly projected from the surface. To the ink composition suitable for printing onto such a non-porous printing material, a binding resin is usually added, and a coat for binding and fixing the silver particles to the surface of the printing material is formed by the above-described binding resin. The silver particles having a large median diameter dso as described above are significantly projected also from such a coat. Consequently, the fixing property of the silver particles to the printing material may possibly be insufficient in all of these cases.

Most of the other components including an antitarnish agent are present only near the surface of the printing material. The same state also occurs for the coat. Thus, in particular, the wide range of the upper print face side among surfaces of the silver particles is exposed without being covered with the antitarnish agent, which may easily lead to discoloration.

On the other hand, with the fine silver particles having the median diameter d₅₀ satisfying the above-described range, the projection amount from the surface of the printed printing material, can be smaller than that of the above-described case. In addition, in particular, when a coat is formed on the surface of the printing material, most of the silver particles can be covered with the coat. Consequently, the fixing property to the printing material can be improved. Under these conditions, the surfaces of the silver particles can be covered with the antitarnish agent over wider ranges as compared with the above-described case, thus, the discoloration can be prevented more effectively.

The addition amount of the silver colloid is preferably 1 to 20 wt% in terms of the content of the silver particles contained in the silver colloid based on the total amount of the ink composition. When the addition amount of the silver colloid is less than this range, a printing face having favorable metal gloss may not be formed. Adversely, when the addition amount is over this range, the solid concentration in the ink composition becomes too high, thus, when the ink composition is used in a printer of an inkjet method, discharging stability from the nozzle of the head is lowered, which may result in unfavorable printing.

The addition amount of the antitarnish agent is preferably 0.02 to 2 wt% based on the total amount of the ink composition. When the addition amount of the antitarnish agent is less than this range, an effect of preventing discoloration of silver and an effect of improving a fixing property of a silver particle by the antitarnish agent may not be sufficiently obtained. On the other hand, when the addition amount is over this range, the viscosity of the ink composition is increased, and there is a risk that, when the ink composition is used in a printer of an inkjet method, discharging stability from the nozzle of the head is deteriorated, and the antitarnish agent is likely to deposit, whereby the preservation stability of the ink composition may be lowered.

An aqueous dispersing medium is used as the dispersing medium, thus at least one compound selected from the group consisting of water-soluble 2-mercaptobenzothiazole salts thereof as the antitarnish agent. Since these compounds have water-solubility, the preservation stability of the ink composition can be improved.

The printing method of the present invention is characterized in that a colored transparent ink is superimposingly printed on a print printed using the ink composition containing the silver colloid according to the above-described present invention.

When an ink of, for example, yellow, orange, and the like, is superimposingly printed on a printing face having metal gloss printed using the ink composition of the present invention, gloss of gold can be reproduced without using gold. Furthermore, when printing is superimposingly performed with an ink of other colors, it is possible to reproduce metal gloss similar to the surface of another metal such as iron, nickel, titanium, copper, and also to express metal gloss of various colors that is not existent. In addition, since the ink composition of the base contains the antitarnish agent which prevents discoloration of silver, these metal colors can be maintained over a long period of time.

It is preferable that the ink composition containing the silver colloid and the colored transparent ink are superimposingly printed by an inkjet method. When both the inks are superimposingly printed by the inkjet method, labor and time for superimposing printing can be reduced. By using a printer of the inkjet method capable of printing a full color image by superimposing ink patterns of various colors as described above, the colored transparent ink can be superimposingly printed with a precision as high as, for example, 1440 dpi (dot per inch) on a printing face obtained by printing the ink composition containing the silver colloid, whereby the precision of superimposing printing can be improved.

With respect to the colored transparent ink, it is preferable to use the ink containing a dye or a pigment having a median diameter d₅₀ of 0.12 µm or less by a laser diffraction scattering method as a colorant. Since a dye is dissolved in an ink at a molecular level, favorable metal gloss without granular texture can be expressed. Since the pigment is usually in the form of an opaque particle, when the particle diameter is large, the granular texture may be conspicuous, consequently, favorable metal gloss cannot be expressed. However, when the pigment having a median diameter d₅₀ of 0.12 µm or less by a laser diffraction scattering method is used, the particles cannot be visually recognized. Thus, favorable metal gloss without granular texture, which is substantially the same as in the case of use of the dye, can be expressed.

As the colored transparent ink, the ink containing an aqueous dispersing medium as a dispersing medium is preferably used. The aqueous ink containing an aqueous dispersing medium as a dispersing medium may not damage the printing face formed by printing the ink composition containing silver colloid such as an ink containing an organic solvent as a dispersing medium. Thus, by superimposingly printing the colored transparent ink, deterioration and disappearance of metal gloss on the printing face can be prevented.

### Best Modes for Carrying Out the Invention

The present invention will be described below.

### <Ink composition>

The ink composition of the present invention includes a silver colloid and a water-soluble salt of 2-mercaptobenzothiazole as an antitarnish agent which prevents discoloration of silver, as described above. The ink composition includes an aqueous ink composition using an aqueous dispersing medium such as water as a dispersing medium which is suitable for an application of printing on a porous printing material such as paper, for example, in an inkjet printer for a personal computer.

### <Silver colloid>

Fine silver particles in a dispersed medium in the form of a colloid can be used as the silver colloid. The particle diameter of a silver particle is preferably 0.04 µm or less in terms of the median diameter d₅₀ by a laser diffraction scattering method as described above. The reason for this is as described above. When further improvement in a function of preventing discoloration of silver and further improvement in a fixing property of silver particles to a printing material by an antitarnish agent are taken into consideration, it is further preferable that the median diameter d₅₀ of the silver particle is, in particular, 0.03 µm or less among the above-described range. The lower limit of the median diameter d₅₀ of the silver particle is not limited in particular, and those up to a technologically producible minimum range can also be used.

The aqueous silver colloid suitable for an aqueous ink composition is produced by reducing an aqueous solution containing silver ions, for example, a silver nitrate aqueous solution to deposit silver particles in the aqueous solution, as described above.

For example, if a silver nitrate aqueous solution is added to a mixed solution of iron (II) sulfate aqueous solution and a citric acid aqueous solution, a precipitate of dark blue is obtained. Then, if this precipitate is filtrated and separated, washed with distilled water, then, distilled water is poured, an aqueous silver colloid showing favorable dispersion stability of the silver particles can be produced.

The aqueous silver colloid can also be produced by spraying an aqueous solution containing silver ions to contact with a hydrogen flame to cause reduction and deposition described, for example, in Japanese Unexamined Patent Publication No.JP 07-173511 A (1995).

If a surfactant or hydrophilic protective colloid is added to an aqueous solution at any time before and after a reduction reaction in producing a silver colloid by these production methods, dispersion stability of silver particles can be further improved.

Preferable as the hydrophilic protective colloid are, for example, gelatin, albumin, gum arabic, protalbinic acid and lysalbinic acid, and those adapted to an aqueous dispersing medium such as water among polymer pigment dispersing agents described in Japanese Unexamined Patent Publication No.JP 11-80647 A (1999). Specific examples of such a hydrophilic protective colloid include: Solsperse 20000, 27000 (trade names) manufactured by ZENEKA Inc.; Disperbyk 180, 184, 190 (tradenames) manufactured by BYK Chemie GmbH; Polymer 451 (trade name) manufactured by EFKA Chemical B.V.; FLOWLEN DOPA-17 manufactured by Kyoeisha Chemical CO., LTD.; and the like.

The addition amount of the silver colloid to the ink composition is preferably 1 to 20 wt% in terms of content of the silver particles contained in the silver colloid based on the total amount of the ink composition. The reason for this is as described above. It is further preferable that the addition amount of the silver colloids is in particular, 3 to 15 wt% within the above-described range when considering further improving discharging stability when used for printing of the inkjet method by suppressing the solid concentration in the ink composition while forming a printing face having further favorable metal gloss.

In the ink composition, one or more metal colloids containing other metal fine particles can also be used together within a range that does not deteriorate favorable metal gloss due to the silver particles. As such other metal colloid, an aqueous or organic solvent colloid can be used that is prepared by dispersing fine metal particles composed of various metals such as gold, ruthenium, rhodium, palladium, osmium, iridium, platinum, copper, aluminum, zinc, tin, nickel, cobalt, iron in the form of a colloid. When a silver colloid and another one or more metal colloids are used together, the addition amounts of the respective colloids to the ink composition may advantageously be adjusted so that the total amount of metal particles contained in the colloids is within the above-described range.

### <Antitarnish agent>

As the antitarnish agent, water-soluble salts of 2-mercaptobenzothiazole (sodium salt, zinc salt, cyclohexylamine salt and the like), are used.

In particular, a sodium salt thereof is further preferably used because of its excellent water-solubility.

The addition amount of the antitarnish agent is preferably 0.02 to 2 wt% based on the total amount of the ink composition. The reason for this is as described above. It is further preferable that the addition amount of the antitarnish agent is in particular, 0.2 to 1.5 wt% within the above-described range when considering further improvement in discharging stability from the nozzle of the head of the printer by suppressing an increase in the viscosity of the ink composition, further improvement in preservation stability of the ink composition by suppressing deposition of the antitarnish agent, and further improvement in an effect of preventing discoloration of the silver and an effect of improving the fixing property of the silver particle due to the antitarnish agent.

### <Dispersing medium>

As the aqueous dispersing medium for constituting an aqueous ink composition together with both of the above-described components, water is mainly used, and in addition, those prepared by adding a small amount of water-soluble organic solvent can also be used, if necessary, in order to adjust ink dryability, permeability into a porous printing material, wettability to a non-porous printing material, and the like to the water as a main component, for example.

Examples of the water-soluble organic solvent include water-soluble types included in the following list: mono-hydric alcohols such as methanol, ethanol, 1-propanol, isopropanol, s-butanol, t-butanol; ethylene glycol ethers and derivatives thereof such as ethylene glycol monobutyl ether, ethylene glycol monobutyl ether acetate, diethylene glycol monoethyl ether; propylene glycol ethers and derivatives thereof such as propylene glycol monomethyl ether, propylene glycol monomethyl ether acetate; di- or tri-hydric alcohols such as propylene glycol, diethylene glycol, glycerin; aromatic hydrocarbons such as benzene, toluene, xylene; n-paraffin hydrocarbons; iso-paraffin hydrocarbons; dimethyl sulfoxide, N-methyl-2-pyrrolidone, methyl ethyl ketone, cyclohexanone, isophorone.

As the organic solvent which may be added to the water in the aqueous ink composition, one having excellent water-solubility among the above-described solvents may be advantageously used. To the ink composition of the present invention, a binding resin, a dispersing agent, and other conventionally known various components may be added in addition to the above-described components.

### <Binding resin>

The binding resin is used to fix silver particles and the like to the surface of a printing material, and in the aqueous ink composition, for example, a water-soluble binding resin such as cellulose resin, polyamide resin, polyvinylpyrrolidone, water-soluble acrylic resin, water-soluble oxazoline group-containing polymer are preferably used. Among them, a water-soluble oxazoline group-containing polymer is most preferable when improvement in metal gloss of a printing face is taken into consideration.

The binding resin has a weight average molecular weight Mw of preferably 5000 or more when improvement in the fixing property of the silver particle is taken into consideration. However, when the molecular weight is too high, precipitation and deposition of the binding resin are likely to occur, and this may result in unstable discharging of an ink composition. Further, when the ink composition is preserved, precipitation and deposition may occur easily. Therefore, it is preferable that the weight average molecular weight of the binding resin is in particular, 50000 or less within the above-described range, and when these properties are taken into consideration, the molecular weight is further preferably approximately 10000 to 40000.

The content proportion of the binding resin is preferably 0.3 to 5.0 wt%, further preferably 0.5 to 3.0 wt% based on the total amount of the ink composition. When the content proportion is less than this range, effect of improving the fixing property of the silver particle may be insufficient. When the content proportion is over this range, favorable metal gloss may not be imparted to the printing face. Further, the solid concentration in the ink composition becomes too high, thus, when being used for printing of the inkjet method in particular, discharging stability of the ink is lowered, whereby favorable printing may not be performed.

### <Other additives>

Examples of other additives include a surface tension regulator, moistening agent, antifungal agent, biocidal agent and the like.

As the surface tension regulator, a nonionic surfactant is mainly used. Regarding the surface tension regulator, its addition amount should be extremely small to prevent foaming of the ink composition and blotting of printing, and specifically, the content proportion based on the total amount of the ink composition is preferably 0.1 wt% or less, in particular, 0.05 wt% or less, and no addition thereof is desirable, if possible. For adjusting wettability of the aqueous ink composition to non-porous printing bodies, a surface tension regulator such as a fluorine surfactant, silicone surfactant may be added.

The moistening agent is added to suppress drying of the ink to prevent occurrence of clogging of the ink in the nozzle of the head of the printer, and the like, and for example, di-hydric or tri-hydric alcohols, 2-pyrrolidone and derivatives thereof are preferable.

Examples of the di-hydric alcohols include 1,5-pentanediol, propylene glycol, diethylene glycol and the like, and examples of the tri-hydric alcohols include glycerin, trimethylolpropane and the like. Furthermore, 2-pyrrolidone and derivatives thereof include 2-pyrrolidone, N-methyl-2-pyrrolidone and the like. The moistening agent can be used one or more kinds. The content proportion of the moistening agent is preferably 2 to 30 wt% based on the total amount of the ink composition. When two or more moistening agents are used together, the total amount thereof is set within the above-described range.

Together with silver colloid origin silver particles, various dyes and pigments and the like can also be used in combination as a colorant. In this case, for example, gloss of gold can be reproduced without using gold, and metal gloss of various colors that is not existent can be expressed. Furthermore, the colorant such as dyes may be used as a main component and the silver colloid origin silver particles may be used in a smaller amount than that. In this case, metal gloss reproducing the surface of a metal foil and the like is not obtained, however, conditions of so-called metallic painting can be reproduced.

### <Method for producing ink composition>

The ink composition of the present inventions is produced by blending the above-described components at the given content proportions. The order of the blend is not particularly limited, and in particular, 2-mercaptobenzothiazole and the sodium salt thereof and the like are basic. Unless the ink composition itself is maintained basic, there is a risk that the agent once dissolved may easily deposit, and the stability thereof may be lowered.

The phenomenon occurs in aqueous ink compositions. If a basic antitarnish agent such as a sodium salt of 2-mercaptobenzothiazole is used in the aqueous ink composition, in order to improve dispersion stability of the ink composition, it is preferable to maintain the ink composition basic constantly from initiation of production to completion thereof by adding a basic substance before adding a component having a tendency toward rendering the ink composition acidic (for example, glycerin, Olfine E1010).

More specifically, the pH of the ink composition from initiation of production to completion thereof is preferably 9.5 to 12.5, in particular, 9.9 to 12.2. When the pH of the ink composition is less than this range, in particular, the basic antitarnish agent such as 2-mercaptobenzothiazole and sodium salt thereof is likely to deposit, whereby stability of the ink composition may be lowered as described above. On the other hand, when the pH is over this range, an influence may exert on members of the printer of the inkjet method with which the ink composition comes into contact.

As the basic substance, ammonia, organic amines, caustic alkalis and the like are preferable. Among them, the organic amines include one or more of monoethanolamine, diethanolamine, triethanolamine, ethylmonoethanolamine, ethyldiethanolamine, monoisopropanolamine, diisopropanolamine, triisopropanolamine, mono-1-propanolamine, 2-amino-2-methyl-1-propanol and derivatives thereof. Among them, 2-amino-2-methyl-1-propanol is preferable, in particular.

The ink composition of the present invention thus produced can be used suitably for printing of the inkjet method, in particular. The printer adopting the inkjet method include an inkjet printer of so-called on-demand mode, such as a thermal jet method, piezo method, and an inkjet printer of so-called continuous mode in which printing is performed by forming ink liquid droplets while circulating an ink. The ink composition of the present invention can also be used as various inks such as an ink for a marker or ballpoint pen.

### <Printing method>

The printing method of the present invention is characterized in that a colored transparent ink is superimposingly printed on a print printed using the ink composition containing the silver colloid according to the present invention.

As the method for superimposingly printing both the inks, various printing methods can be adopted. In particular, it is preferable to superimposingly print both the inks by the ink jet method. Accordingly, labor and time of superimposing printing can be reduced. By using a printer of the inkjet method capable of printing a full color image by superimposing ink patterns of various colors, a colored transparent ink can be printed with a precision as high as, for example, 1440 dpi (dot per inch) superimposing on a printing face obtained by printing the ink composition containing the silver colloid to improve the precision of superimposing printing.

More specifically, it may be permissible that the ink composition containing the silver colloid of the present invention is filled in an ink cartridge connected to the nozzle through which an ink is discharged firstly when a full color image is formed, and a colored transparent ink having hue in accordance to the metal gloss to be expressed is filled in the ink cartridge connected to a nozzle through which an ink is discharged secondary. Under these conditions, the ink composition containing the silver colloid is printed and the colored transparent ink is superimposingly printed thereon, according to a superimposing printing procedure previously set.

It is also possible that colored transparent inks having different hues are filled in advance in ink cartridges connected to a plurality of nozzles, and the ink composition containing the silver colloid is printed in accordance to the metal gloss to be expressed and a colored transparent ink is selected to be superimposingly printed thereon, or an ink composition containing the silver colloid is printed, and colored transparent inks of two or more colors are superimposingly printed thereon.

As the colored transparent ink used in the above-described printing method, it is preferable to use an ink containing, as a colorant, a dye or a pigment having a median diameter d₅₀ of 0.12 µm or less by a laser diffraction scattering method. The reason for this is as described above. The median diameter d₅₀ by a laser diffraction scattering method of the pigment is preferably 0.10 m or less, in particular, 0.06 µm or less within the above-described range.

As the dye, various dyes can be used in accordance to the intended hue. As described later, the colored transparent ink is preferably an aqueous ink using an aqueous dispersing medium. For such an aqueous ink, a water-soluble dye is used.

The water-soluble dye includes, for example, one or more of acridine dyes, aniline black dyes, anthraquinone dyes, azine dyes, azomethine dyes, benzoquinone dyes, naphthoquinone dyes, indigoid dyes, indophenols dyes, indoaniline dyes, indamine dyes, leuko dyes, naphthalimide dyes, nigrosine dyes, induline dyes, nitro dyes, nitroso dyes, oxazine dyes, dioxazine dyes, oxidation dyes, phthalocyanine dyes, polymethine dyes, quinophthalone dyes, triacrylmethane dyes, diacrylmethane dyes, thiazine dyes, thiazole dyes, xanthine dyes, cyan dyes.

As the pigment, any inorganic pigment and/or organic pigment usually used in the ink composition for inkjet can be used.

Among them, examples of the inorganic pigment include one or more of metal compounds such as titanium oxide, iron oxide, or carbon black produced by known methods such as a contact method, furnace method, thermal method. Examples of the organic pigment include one or more of azo pigments (including azo lakes, insoluble azo pigments, condensed azo pigments, chelate azo pigments), polycyclic pigments (for example, phthalocyanin pigments, perylene pigments, perynone pigments, anthraquinone pigments, quinacridone pigments, dioxazine pigments, thioindigo pigments, isoindolinone pigments, and quinophthalone pigments), dye chelates (for example, basic dye chelates, acidic dye chelates), nitro pigments, nitroso pigments, aniline black.

Specific examples of the pigment include: C. I. Pigment Yellow 74, 109, 110, 138 as yellow pigments; C. I. Pigment Red 122, 202, 209 as magenta pigments; C. I. Pigment Blue 15:3, 60 as cyan pigments; C. I. Pigment Black 7 as black pigments; C. I. Pigment Orange 36, 43 as orange pigments; and C. I. Pigment Green 7, 36 as green pigments.

The dye and pigment can be used one or more kinds according to the hue of the ink. The dye and pigment can also be used together.

The colored transparent ink is an aqueous ink using an aqueous dispersing medium as a dispersing medium. The reason for this is as described above. As the aqueous dispersing medium constituting the aqueous ink, water is mainly used, and in addition, those prepared by adding a small amount of water-soluble organic solvent if necessary to adjust, for example, ink dryability, permeability into a porous printing material, wettability to a non-porous printing material to the water as a main component can also be used.

### EXAMPLES

The present invention will be described further in detail on the basis of examples below.

### Example 1

As a silver colloid, an aqueous silver colloid A was sued (silverparticlecontent concentration: 30wt%), havingamedian diameter d₅₀ of 0.0168 µm measured using a laser diffraction scattering method-type particle size measuring apparatus (Microtrac UPA manufactured by Nikkiso Co., Ltd.). As an antitarnish agent, a sodium salt of 2-mercaptobenzothiazole was used. The silver colloid and the antitarnish agent, and various components described below were blended, stirred, and mixed, then, filtrated using a membrane filter of 0.8 µm to produce an aqueous ink composition. The content proportion of silver particles based on the total weight of the ink composition was 3.0 wt%.

The order of blend was as described below: first, a sodium salt of 2-mercaptobenzothiazole was dissolved in ultrapure water; then, 2-amino-2-methyl-1-propanol was added and the mixture was stirred; then, glycerin, diethylene glycol monobutyl ether, water-soluble oxazoline, Olfine E1010 and Proxel XL-2 were added and stirred; and finally, the aqueous silver colloid A was added and the mixture was stirred.

When the sodium salt of 2-mercaptobenzothiazole, and 2-amino-2-methyl-1-propanol were added to the ultrapure water, and the mixture was stirred, the pH at this point (referred to as "Process 1") was measured to find a value of 12.10. On the other hand, when all components were added and stirred, the pH at this point (referred to as "Process 2") was measured to find a value of 10.52. The results confirm that the pH of the ink composition can be maintained in a range of 9.5 to 12.5 from initiation of production to completion thereof by adding 2-amino-2-methyl-1-propanol. For the measurement of the pH, an HV-40 manufactured by Toa Electronics Ltd. was used.

| (Component) | (Parts by weight) |
|---|---|
| Silver colloid A | 10.0 |
| • Antitarnish agent | |
| sodium salt of 2-mercaptobenzothiazole | 0.5 |
| • Moistening agent | |
| Glycerin | 23.2 |
| • Biocidal agent | |
| Proxel XL-2 (manufactured by Avecia Ltd.) | 0.2 |
| • Dispersing medium | |
| Diethylene glycol monobutyl ether | 10.0 |
| Ultrapure water | 52.6 |
| • Basic substance | |
| 2-amino-2-methyl-1-propanol | 0.5 |
| • Binding resin | |
| Water-soluble oxazoline group-containing polymer | |
| (trade name: EPOCROS WS-700, manufactured by Nippon Shokubai Co. Ltd.) | 2.0 |
| • Surface tension regulator | |
| Ethylene oxide adduct of acetylenediol | |
| (tradename: Olfine E101 manufactured by Nisshin Chemical Industry Co., Ltd.) | 1.0 |

### Example 2

An aqueous ink composition was produced in the same manner as in Example 1 except that 0.2 parts by weight of 2-mercaptobenzothiazole was used as a antitarnish agent, and the amount of ultrapure water was changed to 52. 9 parts by weight.

The order of blend was as described below: since water-solubility of 2-mercaptobenzothiazole is lower than that of a sodium salt, first, the 2-mercaptobenzothiazole was dissolved in diethylene glycol monobutyl ether; then, 2-amino-2-methyl-1-propanol was added and the mixture was stirred ("Process 1"); then, glycerin, ultrapure water, water-soluble oxazoline, Olfine E1010 and Proxel XL-2 were added and the mixture was stirred; and finally, the aqueous silver colloid A was added and the mixture was stirred ("Process 2").

The pH at Process 1 was measured to find a value of 11.04. The pH at Process 2 was measured to find a value of 9.98. The results confirm that the pH of the ink composition can be maintained in a range of 9.5 to 12.5 from initiation of production to completion thereof by adding 2-amino-2-methyl-1-propanol.

### Example 3

An aqueous ink composition was produced in the same manner as in Example 1 except that an aqueous silver colloid B was used (silver particle content concentration: 30 wt%), having a median diameter d₅₀ of 0.0291 µm measured using the above-described laser diffraction scattering method-type particle size measuring apparatus in the same amount as a silver colloid.

The pH at Process 1 was measured to find a value of 12.12. The pH at Process 2 was measured to find a value of 10. 60. The results confirm that the pH of the ink composition can be maintained in a range of 9. 5 to 12.5 from initiation of production to completion thereof by adding 2-amino-2-methyl-1-propanol.

### Example 4

An aqueous ink composition was produced in the same manner as in Example 1 except that an aqueous silver colloid C was used (silver particle content concentration: 30 wt%), having a median diameter d₅₀ of 0.0377 µm measured using the above-described laser diffraction scattering method-type particle size measuring apparatus in the same amount as a silver colloid.

The pH at Process 1 was measured to find a value of 12.10. The pH at Process 2 was measured to find a value of 10.52. The results confirm that the pH of the ink composition can be maintained in a range of 9.5 to 12.5 from initiation of production to completion thereof by adding 2-amino-2-methyl-1-propanol.

### Example 5

An aqueous ink composition was produced in the same manner as in Example 1 except that an aqueous silver colloid D was used (silver particle content concentration: 30 wt%), having a median diameter d₅₀ of 0.0511 µm measured using the above-described laser diffraction scattering method-type particle size measuring apparatus in the same amount as a silver colloid.

The pH at Process 1 was measured to find a value of 12.10. The pH at Process 2 was measured to find a value of 10.54. The results confirm that the pH of the ink composition can be maintained in a range of 9.5 to 12.5 from initiation of production to completion thereof by adding 2-amino-2-methyl-1-propanol.

### Comparative Example 1

An aqueous ink composition was produced in the same manner as in Example 1 except that an antitarnish agent was not blended and the amount of ultrapure water was changed to 53.1 parts by weight.

The ink compositions produced in the above-described Examples and Comparative Example were solid-printed on photo gloss paper for inkjet (QP manufactured by Konica Minolta Photoimaging Inc.) as a porous printing material using a commercially available thermal jet-mode inkjet printer (Deskjet 970 cxi manufactured by Hewlett-Packard Japan, Ltd.) with a dot number set at 2400 dpi.

### Evaluation of discoloration resistance

The above-described solid-printed face was left at an ambient temperature for one week, then, observed visually, and discoloration was evaluated based on the following standards.

Excellent: Beautiful metal gloss not varied from immediately after printing

Good: Slight discoloration, but no problem in metal gloss

Fair: More conspicuous discoloration than the above-described "Good", but within allowable range

Poor: Remarkable discoloration and disappearance of metal gloss

### Evaluation of fixing property

A printing face immediately after printing was rubbed three times continuously while loading with 20 gf (1. 96 N) using an eraser (trade name: MONO manufactured by TOMBOW PENCIL CO., LTD.) and change in the condition was visually observed, and the fixing property of the silver particle was evaluated based on the following standards.

Excellent: No change on printing face even after rubbing three times

Good: Slight change observed on printing face after rubbing three times, but approximately no-problematical level

Fair: Change observed on printing face after rubbing three times, but approximately no-problematical level after rubbing only once

Poor: Remarkable change in printing face only by rubbing once

The results are shown in Table 1 together with the pH measurement values in Process 1 and Process 2.

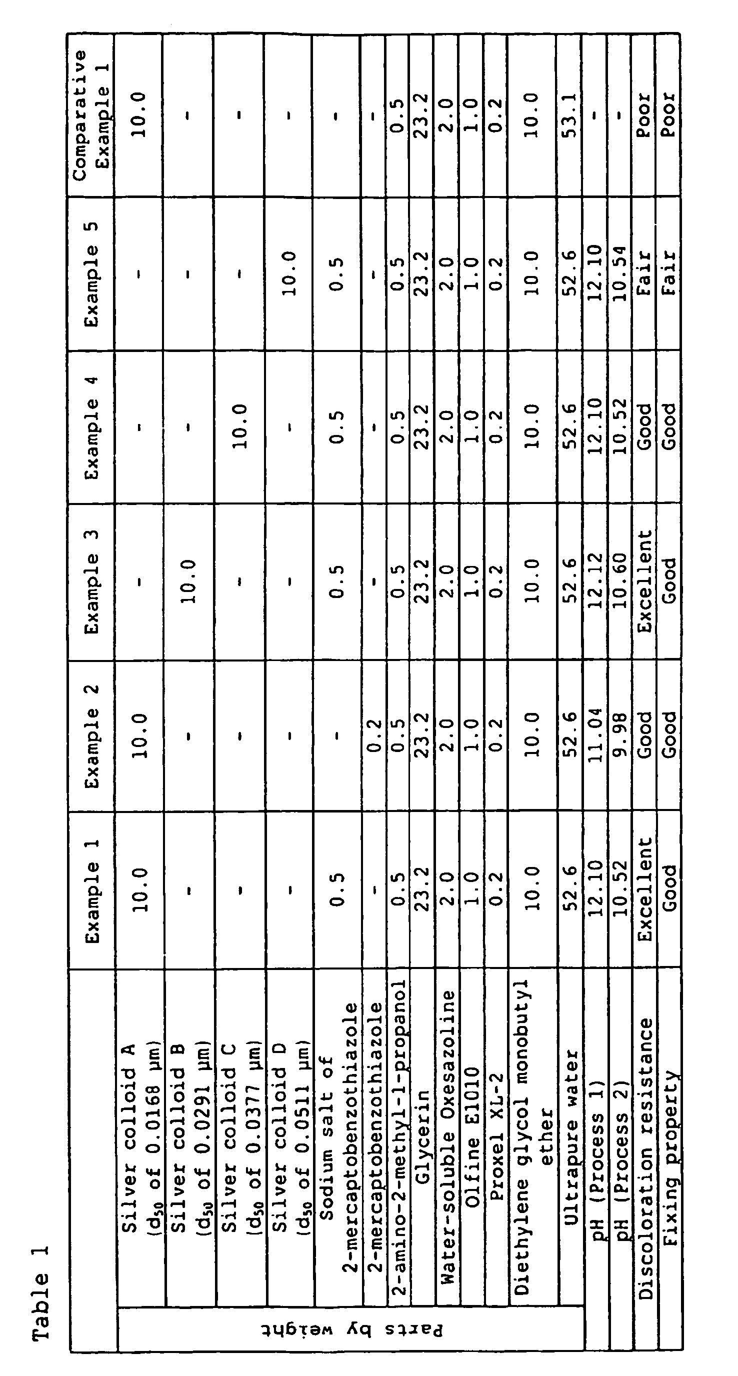

As is understood from the table, on the printing face formed using the ink composition of Comparative Example 1 blending no antitarnish agent, the fixing property of the silver particles to the porous printing material was poor, and peeling occurred to cause remarkable change in the printing face only by rubbing once. In addition, discoloration resistance was insufficient, and discoloration occurred to lose metal gloss after being left for one week. On the other hand, on all the printing faces formed using the ink compositions of Examples 1 to 5 blending the antitarnish agent, the fixing property of the silver particles was more excellent and less discoloration as compared with Comparative Example 1 shown above.

The results of Examples 1 and 2 show that the sodium salt of 2-mercaptobenzothiazole is superior in water-solubility to the 2-mercaptobenzothiazole, and the salt can be blended in a larger amount in the ink composition, thereby, the effect of preventing discoloration of the printing face can be improved. Furthermore, the results of Examples 1, 3, 4 and 5 show that when the median diameter d₅₀ of the silver particle in the silver colloid is smaller, the effect of preventing discoloration and the fixing property to the printing material can be improved.

### Example 6 (comparative)

As a silver colloid, an ethylene glycol monobutyl ether acetate silver colloid E was used (silver particle content concentration: 30 wt%), having a median diameter d₅₀ of 0.0172 µm measured using a laser diffraction scattering method-type particle size measuring apparatus (Microtrac UPA manufactured by Nikkiso Co., Ltd.). As an antitarnish agent, 2-mercaptobenzothiazole was used. The silver colloid and the antitarnish agent, and various components described below were blended, stirred, and mixed, then, filtrated using a membrane filter of 0.8 µm to produce an organic solvent ink composition. The content proportion of silver particles based on the total weight of the ink composition was 3.0 wt%.

| (Component) | (Parts by weight) |
|---|---|
| • Silver colloid E | 10.0 |
| • Antitarnish agent | |
| 2-mercaptobenzothiazole | 0.5 |
| • Binding resin | |
| Vinyl alcohol-modified vinyl chloride-vinyl acetate copolymer | |
| (VAGH manufactured by Dow Chemical Company) | 0.4 |
| Vinyl chloride-vinyl acetate copolymer | |
| (VYHH manufactured by Dow Chemical Company) | 1.6 |
| • Dispersing medium | |
| N-methyl-2-pyrrolidone | 10.0 |
| Ethylene glycol monobutyl ether acetate | 72.7 |
| Cyclohexanone | 4.3 |
| • Basic substance | |
| 2-amino-2-methyl-1-propanol | 0.5 |

### Example 7 (comparative)

An organic solvent ink composition was produced in the same manner as in Example 6 except that octadecylmercaptan was used in the same amount as an antitarnish agent.

### Comparative Example 2

An organic solvent ink composition was produced in the same manner as in Example 6 except that an antitarnish agent was not blended and the amount of ethylene glycol monobutyl ether acetate was changed to 73.2 parts by weight.

The ink compositions produced in the above-described Examples and Comparative Example were solid-printed on a PET film as a non-porous printing material using a commercially available piezo-mode inkjet printer (SOLJET PRO II manufactured by Roland DG Corporation) with a dot number set at 1440 dpi. The discoloration was evaluated by carrying out the above-described discoloration resistance evaluation, and the fixing property of silver particles was evaluated by carrying out the above-described fixing property evaluation.

The results are shown in Table 2.

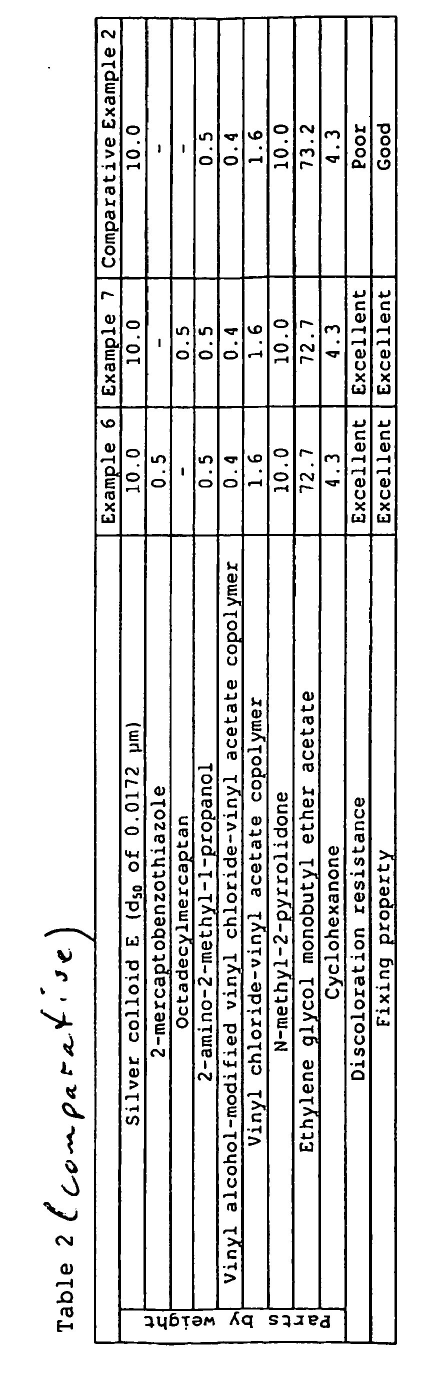

As is understood from Table, on the printing face formed using the ink composition of Comparative Example 2 blending no anti tarnish agent, the fixing property of the silver particles to the non-porous printing material was slightly poor as compared with Examples 6 and 7. In addition, discoloration resistance was also insufficient, and discoloration occurred to lose metal gloss after being left for one week. On the other hand, on all the printing faces formed using the ink compositions of Examples 6 and 7, the fixing property of the silver particles was more excellent as compared with Comparative Example 2 shown above and less discoloration.

### Example 8

The ink composition produced in Example 1 was solid-printed on photo gloss paper for inkjet (QP manufactured by Konica Minolta Photoimaging Inc.) as a porous printing material using a commercially available thermal jet-mode inkjet printer (Deskjet 970 cxi manufactured by Hewlett-Packard Japan, Ltd.) with a dot number set at 2400 dpi. Then, using a yellow ink (dye, aqueous) incorporated as standard on the inkjet printer, solid-printing was superimposingly carried out on the solid-print. Then, the printing face was observed to find that gloss of gold could be reproduced without using gold.

### Example 9

The ink composition produced in Example 1 was solid-printed on photo gloss paper for inkjet (QP manufactured by Konica Minolta Photoimaging Inc.) as a porous printing material using a commercially available piezo-mode inkjet printer (Colorio PX-V700 manufactured by Seiko Epson Corporation) with a dot number set at 1440 dpi. Then, using a yellow ink (pigment, aqueous) incorporated as standard on the inkjet printer, solid-printing was superimposingly carried out on the solid-print. Then, the printing face was observed to find that gloss of gold could be reproduced without using gold. The median diameter d₅₀ of the pigment in the yellow ink was measured using a laser diffraction scattering method-type particle size measuring apparatus (Microtrac UPA manufactured by Nikkiso Co., Ltd.) to find a value of 0.0535 µm.

## Claims

1. An ink composition comprising a silver colloid, an aqueous dispersing medium and a water-soluble salt of 2-mercaptobenzothiazole.

2. The ink composition according to Claim 1, wherein the silver colloid has a median diameter d₅₀ of 0.04 µm or less as measured by a laser diffraction scattering method.

3. The ink composition according to Claim 1 or 2, comprising the silver colloid in a proportion of 1 to 20 wt% in terms of content of silver particles contained in the silver colloid based on the total amount of the ink composition.

4. The ink composition according to any one of Claims 1 to 3, comprising the water-soluble salt of 2-mercaptobenzothiazole in a proportion of 0.02 to 2 wt% based on the total amount of the ink composition.

5. The ink composition according to any one of Claims 1 to 4, further comprising at least one basic substance selected from the group consisting of ammonia, organic amines, and caustic alkalis.

6. The ink composition according to Claim 5, wherein the basic substance is 2-amino-2-methyl-1-propanol.

7. The ink composition according to any one of Claims 1 to 4, obtainable by blending a basic substance before adding a component having a tendency toward rendering the ink composition acidic, in order to maintain the ink composition basic constantly from initiation of production to completion thereof.

8. The ink composition according to any one of Claims 1 to 4, further comprising a water-soluble oxazoline group-containing polymer as a binding resin.

9. The ink composition according to Claim 1, wherein the water-soluble salt of 2-mercaptobenzothiazole is a sodium salt of 2-mercaptobenzothiazole.

10. A printing method, wherein a colored transparent ink is superimposingly printed on a print printed using the ink composition containing the silver colloid according to any one of Claims 1 to 9.

11. The printing method according to Claim 10, wherein the ink composition containing the silver colloid and the colored transparent ink are superimposingly printed by an inkjet method.

12. The printing method according to Claim 10 or 11,
wherein a colored transparent ink containing a dye or a pigment having a median diameter d50 of 1.2 µm or less as measured by a laser diffraction scattering method is used as a colorant.

13. The printing method according to any one of Claims 10 to 12, wherein a colored transparent ink containing an aqueous dispersing medium as a dispersing medium is used.

14. A use of an ink composition comprising a silver colloid, an aqueous dispersing medium and at least one compound selected from the group consisting of 2-mercaptobenzothiazole and salts thereof for expression of metal gloss in an ink jet printing method.

## Patentansprüche

1. Tintenzusammensetzung, umfassend ein Silberkolloid, ein wässriges Dispersionsmedium und ein wasserlösliches Salz von 2-Mercaptobenzothiazol.

2. Tintenzusammensetzung gemäß Anspruch 1, worin das Silberkolloid einen Mediandurchmesser d50 von 0,04 µm oder kleiner aufweist, gemessen mit einem Laserdiffraktions-Streuverfahren.

3. Tintenzusammensetzung gemäß Anspruch 1 oder 2, umfassend das Silberkolloid in einem Anteil von 1 bis 20 Gew.%, ausgedrückt als Gehalt von Silberpartikeln, die in dem Silberkolloid enthalten sind, bezogen auf die Gesamtmenge der Tintenzusammensetzung.

4. Tintenzusammensetzung gemäß irgendeinem der Ansprüche 1 bis umfassend das wasserlösliche Salz von 2-Mercaptobenzothiazol in einem Anteil von 0,02 bis 2 Gew.%, bezogen auf die Gesamtmenge der Tintenzusammensetzung.

5. Tintenzusammensetzung gemäß irgendeinem der Ansprüche 1 bis 4, ferner umfassend mindestens eine basische Substanz, ausgewählt aus der Gruppe bestehend aus Ammoniak, organischen Aminen und kaustischen Alkalimitteln.

6. Tintenzusammensetzung gemäß Anspruch 5, worin die basische Substanz 2-Amino-2-methyl-1-propanol ist.

7. Tintenzusammensetzung gemäß irgendeinem der Ansprüche 1 bis 4, erhältlich durch Einmischen einer basischen Substanz, bevor eine Komponente zugegeben wird, die eine Tendenz aufweist, die Tintenzusammensetzung anzusäuern, um die Tintenzusammensetzung vom Anfang der Herstellung bis zu ihrer Vollendung konstant basisch zu halten.

8. Tintenzusammensetzung gemäß irgendeinem der Ansprüche 1 bis 4, ferner umfassend ein wasserlösliches Oxazolingruppe-enthaltendes Polymer als Bindemittelharz.

9. Tintenzusammensetzung gemäß Anspruch 1, worin das wasserlösliche Salz von 2-Mercaptobenzothiazol ein Natriumsalz von 2-Mercaptobenzothiazol ist.

10. Druckverfahren, worin eine gefärbte, transparente Tinte überdeckend auf einen Druck gedruckt wird, der unter Verwendung der Tintenzusammensetzung, enthaltend das Silberkolloid, gemäß irgendeinem der Ansprüche 1 bis 9 gedruckt ist.

11. Druckverfahren gemäß Anspruch 10, worin die Tintenzusammensetzung, die das Silberkolloid enthält, und die gefärbte, transparente Tinte überdeckend mit einem Tintenstrahlverfahren gedruckt werden.

12. Druckverfahren gemäß den Ansprüchen 10 oder 11, worin eine gefärbte, transparente Tinte, die einen Farbstoff oder ein Pigment mit einem Mediandurchmesser d50 von 1,2 µm oder kleiner, gemessen mit einem Laserdiffraktions-Streuverfahren, als Färbemittel enthält, verwendet wird.

13. Druckverfahren gemäß irgendeinem der Ansprüche 10 bis 12, worin eine gefärbte, transparente Tinte, die ein wässriges Dispersionsmedium als Dispersionsmedium enthält, verwendet wird.

14. Verwendung einer Tintenzusammensetzung, die ein Silberkolloid, ein wässriges Dispersionsmedium und mindestens eine Verbindung, ausgewählt aus der Gruppe bestehend aus 2-Mercaptobenzothiazol und Salzen hiervon, umfasst, für die Herbeiführung eines Metallglanzes in einem Tintenstrahldruckverfahren.

## Revendications

1. Composition d'encre comprenant un colloïde d'argent, un milieu dispersant aqueux et un sel soluble dans l'eau du 2-mercaptobenzothiazole.

2. Composition d'encre selon la revendication 1, dans laquelle le colloïde d'argent a un diamètre moyen d50 inférieur ou égal à 0,04 µm tel que mesuré par un procédé de diffusion/diffraction laser.

3. Composition d'encre selon la revendication 1 ou 2, comprenant le colloïde d'argent dans une proportion allant de 1 à 20 % en poids en termes de teneur en particules d'argent contenues dans le colloïde d'argent en se basant sur la quantité totale de la composition d'encre.

4. Composition d'encre selon l'une quelconque des revendications 1 à 3, comprenant le sel soluble dans l'eau du 2-mercaptobenzothiazole dans une proportion allant de 0,02 à 2 % en poids en se basant sur la quantité totale de la composition d'encre.

5. Composition d'encre selon l'une quelconque des revendications 1 à 4, comprenant en outre au moins une substance basique choisie dans le groupe comprenant l'ammoniac, des amines organiques, et des alcalis caustiques.

6. Composition d'encre selon la revendication 5, dans laquelle la substance basique est le 2-amino-2-méthyl-1-propanol.

7. Composition d'encre selon l'une quelconque des revendications 1 à 4, pouvant être obtenue en mélangeant une substance basique avant d'ajouter un composant ayant une tendance à rendre la composition d'encre acide, afin de maintenir la composition d'encre constamment basique du début de sa production jusqu'à sa fin.

8. Composition d'encre selon l'une quelconque des revendications 1 à 4, comprenant en outre un polymère contenant un groupe oxazoline soluble dans l'eau comme résine de liaison.

9. Composition d'encre selon la revendication 1, dans laquelle le sel soluble dans l'eau du 2-mercaptobenzothiazole est un sel de sodium du 2-mercaptobenzothiazole.

10. Procédé d'impression, dans lequel une encre transparente colorée est imprimée de manière à se superposer à une impression imprimée en utilisant la composition d'encre contenant le colloïde d'argent selon l'une quelconque des revendications 1 à 9.

11. Procédé d'impression selon la revendication 10, dans lequel la composition d'encre contenant le colloïde d'argent et l'encre transparente colorée sont imprimés de manière à se superposer par un procédé à jet d'encre.

12. Procédé d'impression selon la revendication 10 ou 11, dans lequel une encre transparente colorée, contenant un colorant ou un pigment ayant un diamètre moyen d50 inférieur ou égal à 1,2 µm tel que mesuré par un procédé de diffusion/diffraction laser, est utilisée comme colorant.

13. Procédé d'impression selon l'une quelconque des revendications 10 à 12, dans lequel une encre transparente colorée, contenant un milieu dispersant aqueux comme milieu dispersant, est utilisée.

14. Utilisation d'une composition d'encre comprenant un colloïde d'argent, un milieu dispersant aqueux et au moins un composé choisi dans le groupe comprenant le 2-mercaptobenzothiazole et ses sels pour l'expression d'un éclat métallique dans un procédé d'impression à jet d'encre.
